# EUROPÄISCHE PATENTANMELDUNG

(11) **EP 1 775 099 A2**
(43) Veröffentlichungstag der Anmeldung: **18.04.2007**
(21) Anmeldenummer: 06021406.1
(22) Anmeldetag: 12.10.2006
(51) Int. Cl.: B29C 47/64

(54) **Stift-Extruder**

(30) Priorität: 12.10.2005 DE 102005048846
(71) Anmelder: VMI - AZ Extrusion GmbH, 93486 Runding (DE)
(72) Erfinder: Uphus, Reinhard, 30419 Hannover (DE)
(74) Vertreter: Baronetzky, Klaus

(57) **Zusammenfassung**

Die Erfindung betrifft einen Stift-Extruder (10) für die Förderung von Kunststoffen, insbesondere Elastomeren, mit einer Extruderschnecke (14) und einem festen Extrudergehäuse (12), in dem die Extruderschnecke (14) drehbar gelagert ist. Eine Mehrzahl von Stiften (22) sind auf der Extruderschnecke (14) befestigt und erstrecken sich radial nach auswärts. Mindestens ein Teil der Extruderschnecke (14) als Zylinder ausgebildet ist und dass das Extrudergehäuse (12) dem Teil benachbart im Wesentlichen spiralige Fördergänge und Durchbrechungen (32) für die Stifte (22) aufweist.

## Beschreibung

Die Erfindung betrifft einen Stift-Extruder für die Förderung von Kunststoffen, insbesondere Elastomeren, aber auch Naturkautschuk.

Derartige Extruder werden seit vielen Jahren erfolgreich eingesetzt. Beispielsweise zeigt die DE-OS 22 35 784 einen Stift-Extruder von 1972, der bereits hinsichtlich der radialen Eintrittstiefe der Stifte einstellbar ist. Die Stifte erstrecken sich zur Extruderschnecke hin und sind gehäusefest, wobei Schneckenstege der Extruderschnecke je Durchbrechungen aufweisen, die das Durchtreten des betreffenden Stifts auf dieser axialen Höhe ermöglichen.

Auch wenn vielfach angenommen wird, dass der höhere Durchsatz eines derartigen Stift-Extruders im Vergleich zu einem Extruder ohne Stifte darauf zurückzuführen ist, dass die Rotationsströmung im Schneckenkanal behindert wird, zeigen nähere Untersuchungen, dass der Durchsatzgewinn an sich aus der zunehmenden Relativgeschwindigkeit zwischen den ortsfesten Stiften einerseits und den rotierenden Schneckenflanken andererseits resultiert. Es wird praktisch das Extrudat ständig vor den Stiften her geschoben und durch die Durchbrechungen in den Förderstegen förderwirksam partiell in Richtung Extrusionsdüse gedrückt, und zwar in dem stromab liegenden Teilbereich des dort geförderten Extrudats.

Ferner ist es auch bekannt geworden, die Stifte schneckenfest anzuordnen und insofern eine kinematische Vertauschung vorzunehmen. Hierzu sei beispielsweise auf die DE-GM 71 03 071 verwiesen. Bei dieser Lösung, die für Doppelschnecken-Extruder bestimmt ist, kämmen praktisch zwei unterschiedlich angeordnete und ausgebildete Stiftanordnungen miteinander. Hierbei ist nachteilig, dass dort keine Förderwirkung entsteht, während die Mischwirkung dieser Schnecken gut ist. Andererseits ist diese Lösung nur für Doppelschnecken-Extruder geeignet.

Eine ähnliche Lösung, die grundsätzlich auch für Einfach-Extruder geeignet ist, ist aus der DE-OS 26 50 248 bekannt. Bei dieser Lösung laufen Stiftreihen in einer Art Ringnuten, die jedoch nicht durchgängig sind, sondern durch eine Vielzahl von einwärts sich erstreckenden Vorsprüngen gebildet sind. Auch hier entsteht praktisch keine Förderwirkung, jedoch eine starke Durchmischung, wie sie für die Plastifizierung und Homogenisierung des Extrudats wünschenswert ist.

Ein Nachteil der bekannten Stift-Extruder besteht darin, dass eine Vielzahl von Stiften erforderlich ist, so dass der Strömungskanal durch die Stiftquerschnitte stark eingeengt wird. Dies erzeugt einen recht großen Druckverlust, so dass der Vorteil des Stift-Extruders hinsichtlich des Durchsatzgewinns hier durch den hohen Druckabfall in der Stiftzone und dem damit einhergehenden Durchsatzverlust wieder kompensiert wird.

Ferner sind zahlreiche weitere Formen von Stiftextrudern vorgeschlagen worden. Die meisten seit Anfang der 70er Jahre vorgeschlagenen und teilweise auch realisierten Lösungen weisen Stifte auf, die sich radial nach einwärts, also vom Extrudergehäuse ausgehend, erstrecken. Teilweise werden derartige Stifte auch mit Transfermix-Extrudern kombiniert, um die Durchmischung gerade des kalten Extrudats noch zu verbessern. Problem ist jedoch stets der Durchsatz, der teils unter den Erwartungen bleibt.

Demgegenüber liegt der Erfindung die Aufgabe zugrunde, einen Stiftextruder gemäß dem Oberbegriff von Anspruch 1 zu schaffen, der hinsichtlich der Durchmischungsfähigkeit gerade auch bei hoch viskosem Extrudat verbessert ist, ohne dass der Durchsatz leiden würde.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass mindestens ein Teil der Extruderschnecke als Zylinder, also praktisch als Außenzylinder ausgebildet ist. Auch wenn hier der Begriff Extruderschnecke für diesen Teil ebenfalls verwendet wird, nachdem dieser Teil sich wie eine Extruderschnecke dreht, versteht es sich, dass tatsächlich ein zylindrischer Körper, also ein Körper ohne Schneckengänge und Schneckenstege oder spiralige Stege vorliegt.

Erfindungsgemäß ist es vorgesehen, dass spiralige Fördergänge im Extrudergehäuse angeordnet sind, zusammen mit Durchbrechungen der Schneckenstege dort, die beim Drehen der Extruderschnecke von den Stiften in Umfangsrichtung durchtreten werden.

Es versteht sich, dass sich die erfindungsgemäße Ausgestaltung sowohl über die gesamte Förderlänge des Stift-Extruders erstrecken kann als auch über einen Teil, beispielsweise einen vorderen Teil, einen mittleren Teil oder einen hinteren Teil des Stift-Extruders.

Erfindungsgemäß überraschend ergibt sich durch die Ausgestaltung des Stift-Extruders dort mit Stiften, die in Stiftebenen angeordnet sind und in Durchbrechungen von Fördergängen umlaufen, eine besonders gute Förderwirkung. Offenbar schieben die Stifte je eine Menge Extrudat so vor sich her, dass ein großer Teil vor Eintritt in die je betrachtete Durchbrechung in Förderrichtung abgezweigt wird und dementsprechend in dem betreffenden Fördergang spiralig gefördert wird. Dennoch ergibt sich durch die an jeder Durchbrechung vorgenommene Aufteilung des Extrudatstroms in einen Teil, der die Durchbrechung durchtritt, und einen Teil, der in den in Strömungsrichtung folgenden spiraligen Fördergang eintritt, eine besonders gute Durchmischungswirkung.

Erfindungsgemäß ist der Strömungsquerschnitt keineswegs eingeschränkt, sondern sogar vergrößert. Hier kommt der Erfindung zugute, dass der Förderdurchmesser radial vergrößert ist, nachdem die Fördergänge im Extrudergehäuse und nicht in der Extruderschnecke verlaufen. Die Förderlänge jedes Fördergangs ist damit gleichsam automatisch vergrößert, so dass sich auch ein geringerer Druckgradient und damit ein größerer Förderstrom ergibt.

Wenn der Extruder mit der gleichen Drehgeschwindigkeit betrieben wird ergibt sich zudem auch eine höhere Relativgeschwindigkeit zwischen "Extruderschnecke" und Gehäuse, so dass der Fördereffekt vergrößert wird. Durch die erfindungsgemäß gestalteten Durchbrechungen ergibt sich dennoch eine vergleichsweise sanfte Materialaufteilung und Durchmischung, die ein Überhitzen des Extrudats verhindert.

Erfindungsgemäß besonders günstig ist es, dass der Druckaufbau durch den Extruder über einen längeren Fördergang erfolgen kann. Die Druckdifferenz pro Längeneinheit des in einem Fördergang geförderten Extrudats ist damit geringer, so dass eine längere Druckaufbauzone entsteht.

In vorteilhafter Ausgestaltung kann es vorgesehen sein, die Anordnung der Stifte, die Anordnung der Stiftebenen und auch die Ausgestaltung der Stifte im Einzelnen je an die Erfordernisse anzupassen. Beispielsweise können eingangsseitig eher gröbere und größere Stifte eingesetzt werden, um eine Grobdurchmischung zu gewährleisten, während die Ausgestaltung und Anordnung der Stiftebenen und Stifte in Strömungsrichtung abwärts betrachtet feiner wird. Die Eingangsstiftebenen können beispielsweise auch aus Stiften bestehen, die wie eine Art Stollen ausgebildet sind. Es lassen sich beispielsweise auch Stifte mit konisch zulaufenden Flanken einsetzen, oder auch Stifte, die als Mehrkant, beispielsweise als Dreikant, Vierkant oder Sechskant ausgebildet sind. Die Stifte können auch - gerade auch in dem Eingangs-Stiftebenen - assymetrisch zueinander verteilt sein, um kalte und schlecht durchmischte Extrudatbereiche besonders gut verteilen zu können.

Gemäß einer Ausgestaltung ist es vorgesehen, dass lediglich ein Teil der Extruderschnecke als Zylinder und lediglich ein Teil des Extrudergehäuses mit Fördergängen ausgebildet sind, und dass stromauf dieses Teils das Extrudergehäuse in üblicher Weise als Innenzylinder mit im Wesentlichen glatten Wänden und die Extruderschnecke mit Schneckengängen ausgebildet ist.

Gemäß einer besonders vorteilhaften Ausgestaltung ist es vorgesehen, dass die Fördergänge im Extrudergehäuse eine Steigung von weniger als 2, insbesondere etwa 0,8 bis 1,6, bevorzugt etwa 1,2 aufweisen.

Gemäß einer besonders vorteilhaften Ausgestaltung ist es vorgesehen, dass die Stifte der Zylinderschnecke sich je in einer Ebene erstrecken und innerhalb dieser symmetrisch verteilt sind, wobei insbesondere 4, 6 oder 8 Stifte pro Ebene angeordnet sind.

Gemäß einer besonders vorteilhaften Ausgestaltung ist es vorgesehen, dass die Stifte je einen kreisförmigen Querschnitt aufweisen und einen Längen/Durchmesserverhältnis von 0,5 bis 2, bevorzugt etwa 1 aufweisen.

Gemäß einer besonders vorteilhaften Ausgestaltung ist es vorgesehen, dass die Stifte sich durch im Wesentlichen die gesamte radiale Erstreckung der Fördergänge erstrecken und knapp, insbesondere etwa 5 bis 10% vor der Wand des Extrudergehäuses, bezogen auf die radiale Höhe der Fördergänge, enden.

Gemäß einer besonders vorteilhaften Ausgestaltung ist es vorgesehen, dass eine Mehrzahl, insbesondere 2 bis 20, bevorzugt 3 bis 12 und besonders bevorzugt 4 bis 8 Ebenen von Stiften axial aufeinanderfolgend angeordnet sind.

Gemäß einer besonders vorteilhaften Ausgestaltung ist es vorgesehen, dass auf jeder Stiftebene eine gleiche Anzahl von Stiften angeordnet ist, und zwar bevorzugt axial zueinander ausgerichtet.

Gemäß einer besonders vorteilhaften Ausgestaltung ist es vorgesehen, dass auf jeder Ebene die gleiche Anzahl von Stiften angeordnet sind, wobei die Stifte zueinander axial versetzt sind.

Gemäß einer besonders vorteilhaften Ausgestaltung ist es vorgesehen, dass die Stifte in mehreren Stiftebenen angeordnet sind und mindestens 2 Stiftebenen unterschiedliche Anzahlen von Stiften aufweisen.

Gemäß einer besonders vorteilhaften Ausgestaltung ist es vorgesehen, dass die Anzahl der Stifte pro Stiftebene in Strömungsrichtung betrachtet zunimmmt.

Gemäß einer besonders vorteilhaften Ausgestaltung ist es vorgesehen, dass der Durchmesser der Stifte in aufeinanderfolgenden Stiftebenen in Strömungsrichtung betrachtet abnimmt.

Gemäß einer besonders vorteilhaften Ausgestaltung ist es vorgesehen, dass die Anordnung der Stiftebenen so gewählt ist, dass die Durchbrechungen in den spiraligen Fördergängen je zu unterschiedlichen Zeitpunkten von den Stiften durchtreten werden.

Gemäß einer besonders vorteilhaften Ausgestaltung ist es vorgesehen, dass die Durchbrechungen je einen Durchmesser - in Umfangsrichtung betrachtet - aufweisen, der um 2 bis 10 %, bevorzugt etwa 4 % größer als der Durchmesser des betreffenden Stiftes ist.

Gemäß einer besonders vorteilhaften Ausgestaltung ist es vorgesehen, dass jede Durchbrechung zwei Durchbrechungs-Seitenwände aufweist, die Förderstege der spiraligen Fördergänge begrenzen, und dass die Seitenwände sich parallel zur Drehrichtung der Extruderschnecke erstrecken.

Gemäß einer besonders vorteilhaften Ausgestaltung ist es vorgesehen, dass die Durchbrechungen begrenzende Durchbrechungs-Seitenwände abgerundet ausgebildet sind.

Gemäß einer besonders vorteilhaften Ausgestaltung ist es vorgesehen, dass die Seitenwände der Durchbrechungen der Strömungsrichtung folgend abgeschrägt ausgebildet sind.

Weitere Vorteile, Einzelheiten und Merkmale ergeben sich aus der nachfolgenden Beschreibung mehrer Ausführungsbeispiele der Erfindung anhand der Zeichnung.

Es zeigen:
- Fig. 1: eine schematische teilweise aufgebrochene Ansicht eines erfindungsgemäßen Stift-Extruders in einer Ausführungsform;
- Fig. 2: eine schematische Darstellung eines Details des erfindungsgemäßen Stift-Extruders, nämlich in einer Abwicklung;
- Fig. 3: einen Schnitt durch eine weitere Ausführungsform eines erfindungsgemäßen Extruders; und
- Fig. 4: eine Draufsicht eines Details einer weiteren Ausführungsform eines Extruders.

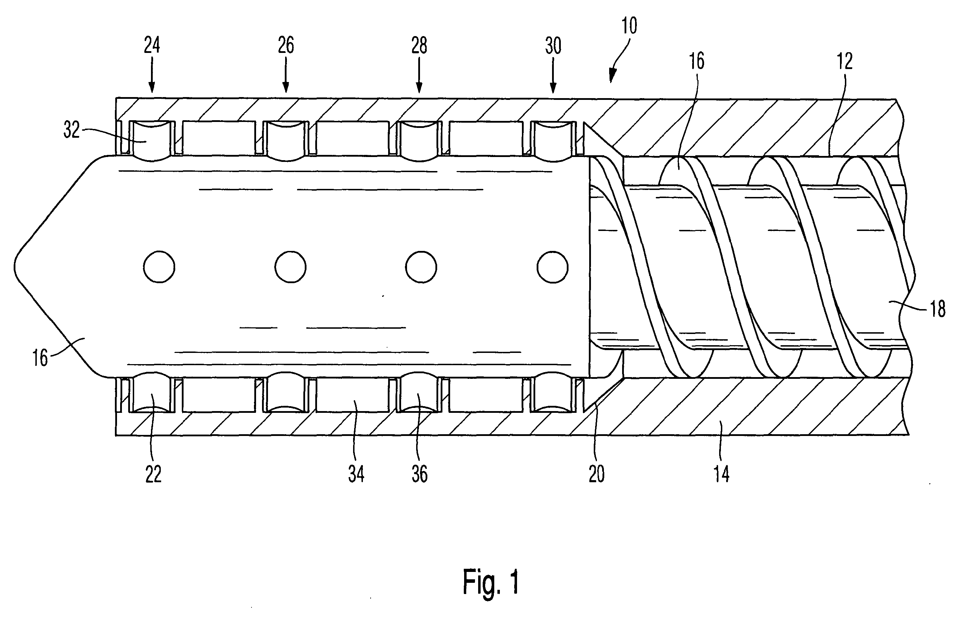

Der in Fig. 1 dargestellte Stift-Extruder 10 weist ein Extrudergehäuse 12 und eine Extruderschnecke 14 auf. In einem rückwärtigen, stromauf liegenden Teil ist der erfindungsgemäße Extruder in klassischer Form ausgebildet. Dort ist das Extrudergehäuse 12 als Hohlzylinder vorgesehen, in dem eine Extruderschnecke mit spiraligen Schneckenstegen 16 und sich dazwischen ebenfalls spiralig erstreckenden Fördergängen 18 erstreckt.

Anschließend hieran ist ein sich konisch aufweisen Aufweitbereich 20 vorgesehen, der eine Durchmesserzunahme zu dem erfindungsgemäß ausgebildeten Bereich des Stift-Extruders 10 ermöglicht.

Dort ist die Extruder-Schnecke 16 nach der Art eines Außenzylinders ausgebildet, dessen Durchmesser mit dem Außendurchmesser der Schneckenstege 16 der Extruderschnecke stromauf dieses Bereichs übereinstimmt.

Erfindungsgemäß erstrecken sich von dem Außenzylinder ausgehend eine Vielzahl von Stiften 22. Die Stift 22 laufen in 4 Stiftebenen 24, 26, 28 und 30 je in Durchbrechungen 32, die in spiraligen Fördergängen 34 in erfindungsgemäß besonderer Weise vorgesehen sind. Dort weist das erfindungsgemäße Extrudergehäuse 12 dementsprechend demgegenüber den stromaufliegenden Bereich einen vergrößerten Innendurchmesser auf, und es erstrecken sich dort die spiraligen Fördergänge mit entsprechenden spiraligen Förderstegen 36.

In dem dargestellten Winkel der Umdrehung der Förderschnecke durchtreten je die Stifte 22 die Durchbrechungen 32. Tatsächlich kann man die Verteilung der Stiftanordnung bevorzugt so vornehmen, dass nicht alle Stifte je zum gleichen Zeitpunkt die Durchbrechungen durchtreten, sondern je zu unterschiedlichen Zeitpunkten. Dies kann leicht über einen entsprechenden Winkelversatz realisiert werden und ermöglicht es, Pulsationen durch gleichmäßige Druckbeaufschlagung zu reduzieren bzw. zu meiden.

Während ferner in Fig. 1 alle Durchbrechungen gleichförmig dargestellt sind, ist es erfindungsgemäß günstig, wenn die Stifte unterschiedlich geformt ausgebildet sind, wobei beispielsweise die Stifte der Stiftebene 30 als der Darstellung gegenüber vergrößerte Quader ausgebildet sein können.

Es versteht sich, dass die Durchbrechungen in ihrer Breite an die Stifte 22 je angepasst sind; bevorzugt ist die Breite jeder Durchbrechung in der Darstellung gemäß Fig. 1 betrachtet je um weniges größer als der axiale Durchmesser des betreffenden Stifts.

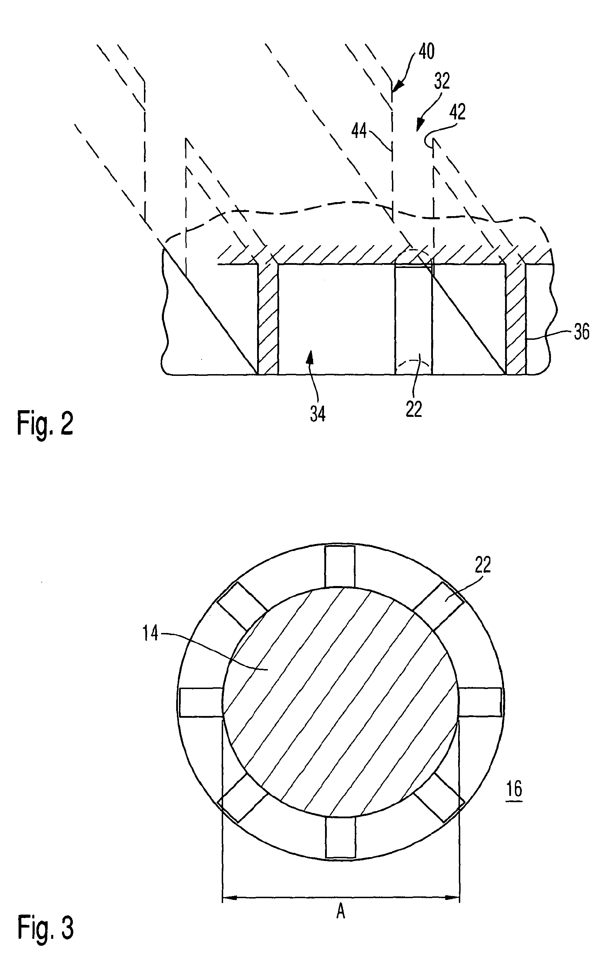

Aus Fig. 2 ist eine Abwicklung eines Details einer Stiftanordnung gemäß Fig. 1 ersichtlich. Dort wie auch in den weiteren Figuren werden gleiche Bezugszeichen für gleiche Teile verwendet.

Wie ersichtlich ist, bewegt sich der Stift 22 in Umfangsrichtung - in der Abbildung gemäß Fig. 2 betrachtet - so, dass er genau durch die Durchbrechung 32 in dem Fördersteg 36 passt. Hierzu ist die Durchbrechung 32 geeignet ausgestaltet, so dass sich Durchbrechungs-Seitenwände 42 und 44 ergeben, die parallel zur Umfangsrichtung verlaufen und dementsprechend zur Hauptrichtung des Förderstegs 36 je schräg ausgebildet sind. Der Schrägstellungswinkel hängt von der Steigung des Fördergangs 34 bzw. der Förderstege 36 ab.

Wenn der Stift 22 die Durchbrechung 32 durchtritt, entsteht je seitlich ein Spalt. Dieser ist erfindungsgemäß recht klein bemessen. Beispielsweise kann er sich auf 5% des Stiftdurchmessers belaufen.

An der spitzen Vorderkante 44 des Förderstegs 36, zur Durchbrechung 32 hin, wird das von dem Stift 22 mitgenommene Material praktisch aufgeteilt in einen Teil, der die Durchbrechung 32 durchtritt und einen größeren Teil, der in Richtung des Fördergangs 34 abgelenkt und damit gefördert wird.

Überraschend lässt sich hierdurch eine besonders große Förderwirkung erzielen, wobei es sich versteht, dass auch die Form des Stiftes in beliebiger geeigneter Weise gewählt werden kann, um die Förderwirkung in Richtung der Fördergänge 36 zu verbessern.

Beispielsweise kann die Stiftform nach der Art eine Raute gewählt werden, so dass die schräge Seitenflanke des Stiftes, die dem Fördergang 36 zugewandt ist, das Extrudat praktisch seitlich schräg in den Fördergang hereinschiebt.

Aus Fig. 3 ist ersichtlich, dass die Stifte 22 symmetrisch und gleichförmig um den Umfang der Extruderschnecke 14 verteilt angeordnet sein können. Hier nehmen insgesamt 8 Stifte einen Teil der Förderfläche ein. Je größer die Stiftanzahl gewählt, desto größer ist die Förderwirkung, desto kleiner ist andererseits aber auch die Durchströmungsfläche, was den Durchsatz wiederum begrenzt. Hier kann in weiten Bereichen eine Anpassung an die Erfordernisse vorgenommen werden.

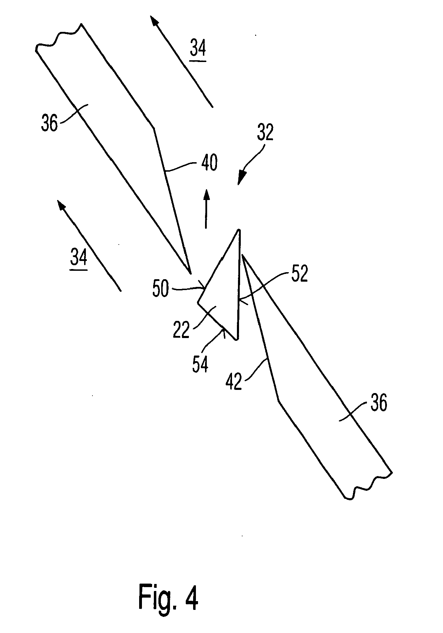

Aus Fig. 4 ist eine modifizierte Ausgestaltung einer Durchbrechung 32 sowie eines Stiftes 22 ersichtlich. Auch hier ist eine Abwicklung dargestellt, wobei der Fördersteg 36 die beiden Fördergänge 34 voneinander trennt.

Bei dieser Ausführungsform sind die Durchbrechungs-Seitenwände 40 und 42 je nicht parallel zur Umfangsrichtung, sondern erstrecken sich einem Winkel, der zwischen dem Winkel der Fördergänge 34 und der Umfangsrichtung liegt. Hier beträgt der Winkel der Fördergänge und Förderstege 35° gegen die Umfangsrichtung, und der Schrägstellungswinkel der Seitenwände 40 und 42 beträgt 15°, bezogen auf die Umfangsrichtung. Es versteht sich, dass beide Winkel sich in beiden Bereichen an die Erfordernisse anpassen lassen, und es ist auch möglich, an dem Übergang zwischen der Rückseite des Förderstegs 36 und der Seitenwand 40 bzw. der Vorderwand des Förderstegs 36 und der Seitenwand 42 einen Radius vorzusehen, um die Umströmung zu erleichtern.

Der Stift 22 ist in dem dargestellten Ausführungsbeispiel in besonderer Weise, nämlich dreieckförmig, ausgebildet. Er weist eine Haupt-Förderfläche 50 auf, die sich schräg zur Umfangsrichtung erstreckt und zwar in einem Winkel von 30°. Durch diese Form soll ein besonders großer Teil des Materials, das durch den Stift 22 bei seinem Umlauf verdrängt wird, in den Fördergang 34 eingeleitet werden. Die Haupt-Förderfläche 50 erstreckt sich daher über die gesamte Breite des Stiftes 22. Der Stift 22 wird weiterhin von einer umfangsparallelen Seitenfläche 52 begrenzt, sowie einer Rückseitenfläche 54, die in beliebiger geeigneter Weise ausgebildet ist, um einerseits die erwünschte Förderwirkung zu erzielen, andererseits eine möglichst geringe Reduktion der freien Förderfläche für das Extrudat zu ermöglichen.

Es versteht sich, dass hier in beliebiger Weise die Formen und Ausgestaltung sowohl des Stiftes als auch der zugehörigen Förderstege an die Erfordernisse angepasst werden können. Beispielsweise können die Förderstege 36 auch von der Spiralform abweichende Formgebungen anschließend an die Durchbrechungen 32 aufweisen, um die Förderwirkung nochmals zu erhöhen.

## Patentansprüche

1. Stift-Extruder für die Förderung von Kunststoffen, insbesondere Elastomeren, mit einer Extruderschnecke und einem festen Extrudergehäuse, in dem die Extruderschnecke drehbar gelagert ist, wobei eine Mehrzahl von Stiften auf der Extruderschnecke befestigt sind und sich radial nach auswärts erstrecken, **dadurch gekennzeichnet, dass** mindestens ein Teil der Extruderschnecke (14) als Zylinder ausgebildet ist und dass das Extrudergehäuse (12) dem Teil benachbart im Wesentlichen spiralige Fördergänge, sowie Durchbrechungen (32) für die Stifte (22), aufweist.

2. Stift-Extruder nach Anspruch 1, **dadurch gekennzeichnet, dass** lediglich ein Teil der Extruderschnecke (14) als Zylinder und lediglich ein Teil des Extrudergehäuses (12) mit Fördergängen (34) ausgebildet sind, und dass stromauf dieses Teils das Extrudergehäuse (12) in üblicher Weise als Innenzylinder mit im Wesentlichen glatten Wänden und die Extruderschnecke (14) mit Schneckengängen (18) ausgebildet ist.

3. Stift-Extruder nach einem der vorhergehenden Ansprüche, **dadurch gekennzeichnet, dass** die Fördergänge (34) im Extrudergehäuse (12) eine Steigung von weniger als 2, insbesondere etwa 0,8 bis 1,6, bevorzugt etwa 1,2 aufweisen.

4. Stift-Extruder nach einem der vorhergehenden Ansprüche, **dadurch gekennzeichnet, dass** die Stifte (22) der Zylinderschnecke sich je in einer Ebene (24; 26; 28; 30) erstrecken und innerhalb dieser symmetrisch verteilt sind, wobei insbesondere 4, 6 oder 8 Stifte (22) pro Ebene angeordnet sind.

5. Stift-Extruder nach einem der vorhergehenden Ansprüche, **dadurch gekennzeichnet, dass** die Stifte (22) je einen kreisförmigen Querschnitt aufweisen und einen Längen/Durchmesserverhältnis von 0,5 bis 2, bevorzugt etwa 1, aufweisen.

6. Stift-Extruder nach einem der vorhergehenden Ansprüche, **dadurch gekennzeichnet, dass** die Stifte (22) sich durch im Wesentlichen die gesamte radiale Erstreckung der Fördergänge (34) erstrecken und knapp, insbesondere etwa 5 bis 10%, vor der Wand des Extrudergehäuses (12), bezogen auf die radiale Höhe der Fördergänge (34), enden.

7. Stift-Extruder nach einem der vorhergehenden Ansprüche, **dadurch gekennzeichnet, dass** eine Mehrzahl, insbesondere 2 bis 20, bevorzugt 3 bis 12, und besonders bevorzugt 4 bis 8 Ebenen (24, 26, 28, 30) von Stiften (22) axial aufeinanderfolgend angeordnet sind.

8. Stift-Extruder nach einem der vorhergehenden Ansprüche, **dadurch gekennzeichnet, dass** auf jeder Stiftebene (24, 26, 28, 30) eine gleiche Anzahl von Stiften (22) angeordnet ist, und zwar bevorzugt axial zueinander ausgerichtet.

9. Stift-Extruder nach einem der Ansprüche 1 bis 7, **dadurch gekennzeichnet, dass** auf jeder Ebene die gleiche Anzahl von Stiften (22) angeordnet sind, wobei die Stifte (22) zueinander axial versetzt sind.

10. Stift-Extruder nach einem der Ansprüche 1 bis 7, **dadurch gekennzeichnet, dass** die Stifte (22) in mehreren Stiftebenen (24, 26, 28, 30) angeordnet sind und mindestens 2 Stiftebenen (24, 26, 28, 30) unterschiedliche Anzahlen von Stiften (22) aufweisen.

11. Stift-Extruder nach Anspruch 10, **dadurch gekennzeichnet, dass** die Anzahl der Stifte (22) pro Stiftebene (24, 26, 28, 30) in Strömungsrichtung betrachtet zunimmmt.

12. Stift-Extruder nach einem der vorhergehenden Ansprüche, **dadurch gekennzeichnet, dass** der Durchmesser der Stifte (22) in aufeinanderfolgenden Stiftebenen (24, 26, 28, 30) in Strömungsrichtung betrachtet abnimmt.

13. Stift-Extruder nach einem der vorhergehenden Ansprüche, **dadurch gekennzeichnet, dass** die Anordnung der Stiftebenen (24, 26, 28, 30) so gewählt ist, dass die Durchbrechungen (32) in den spiraligen Fördergängen (18) je zu unterschiedlichen Zeitpunkten von den Stiften (22) durchtreten werden.

14. Stift-Extruder nach einem der vorhergehenden Ansprüche, **dadurch gekennzeichnet, dass** die Durchbrechungen (32) je einen Durchmesser - in Umfangsrichtung betrachtet - aufweisen, der um 2 bis 10 %, bevorzugt etwa 4 % größer als der Durchmesser des betreffenden Stiftes (22) ist.

15. Stift-Extruder nach einem der vorhergehenden Ansprüche, **dadurch gekennzeichnet, dass** jede Durchbrechung zwei Durchbrechungs-Seitenwände (40, 42) aufweist, die Förderstege (36) der spiraligen Fördergänge (34) begrenzen, und dass die Seitenwände (40, 42) sich parallel zur Drehrichtung der Extruderschnecke (14) erstrecken.

16. Stift-Extruder nach einem der vorhergehenden Ansprüche, **dadurch gekennzeichnet, dass** die Durchbrechungen (32) begrenzende Durchbrechungs-Seitenwände (40, 42) abgerundet ausgebildet sind.

17. Stift-Extruder nach einem der vorhergehenden Ansprüche, **dadurch gekennzeichnet, dass** die Seitenwände (40, 42) der Durchbrechungen (32) der Strömungsrichtung folgend abgeschrägt ausgebildet sind.
